# FASCICULE DE BREVET EUROPEEN

(11) **EP 3 835 885 B1**
(45) Date de publication et mention de la délivrance du brevet: **06.12.2023**
(21) Numéro de dépôt: 19214807.0
(22) Date de dépôt: 10.12.2019
(51) Int. Cl.: G04C 3/00, G01D 5/14, G04G 21/08

(54) **MONTRE POURVUE D'UN ORGANE DE COMMANDE**
ARMBANDUHR MIT STEUERUNGSORGAN
WATCH PROVIDED WITH A CONTROLLER

(43) Date de publication de la demande: 16.06.2021
(73) Titulaire: The Swatch Group Research and Development Ltd, 2074 Marin (CH)
(72) Inventeur: VUILLE, M. Pierry, 2338 Les Emibois (CH); BOURQUIN, Simon, 2000 Neuchâtel (CH); FERRI, M. Yvan, 2024 St-Aubin-sauges (CH)
(74) Mandataire: ICB SA

(56) Documents cités:
- EP-A1- 1 168 113
- CN-A- 105 022 263
- US-A- 5 969 520
- US-A1- 2014 307 531
- US-A1- 2015 253 908
- US-A1- 2019 170 834

## Description

### Domaine technique

L'invention est relative à une montre pourvue d'au moins une fonction gérable de manière électronique et pourvue d'un organe de commande pour contrôler ladite fonction.

### Arrière-plan technologique

Les montres mécaniques ou électromécaniques comprennent de manière standard une tige-couronne qui permet de régler la position des aiguilles en tournant la couronne, ainsi que de remonter le barillet dans le cas d'une montre mécanique. Dans la plupart des cas, la couronne se trouve dans une position de repos proche de la boîte de la montre, et il faut la tirer vers une position de réglage pour ajuster le temps et, le cas échéant, la date.

De plus en plus des fonctions additionnelles sont prévues, tel qu'un affichage électronique d'informations personnelles et/ou géographiques, par exemple un agenda, des données fitness et de géolocalisation. Ceci est le cas également pour les montres équipées d'un mouvement mécanique, par exemple par l'ajout d'un module électronique comprenant un écran digital agencé sur une partie du cadran.

La présence des fonctions additionnelles susmentionnées requiert généralement des moyens de commande spécifiques, qui permettent par exemple de sélectionner une fonction, de naviguer dans un menu, etc.

Des montres électroniques ont été développées avec un organe de commande de type 'joystick' ou 'trackball'. Des exemples de ces solutions sont respectivement illustrés par les documents EP 1168113 et EP 0582150. Mais on notera que ces solutions ne sont pas prévues pour une montre à remontage mécanique. Le document EP 0582150 décrit également une montre pourvue d'une tige-couronne ainsi que d'un dispositif 'trackball'. Le désavantage de cette dernière solution est que la présence de deux organes de commande séparés spatialement n'est pas toujours souhaitable d'un point de vue esthétique et/ou d'un point de vue économique étant donné que la boîte de montre est plus complexe à usiner. On remarquera aussi qu'une bonne étanchéité de la boîte de montre est plus difficile à obtenir avec les organes de commande de type 'joystick' ou 'trackball' décrits dans les documents antérieurs susmentionnés.

CN 105 022 263 A décrit une montre intelligente dont une sphère est montée sur une couronne. Les fonctions de la montre peuvent être choisies à travers la manipulation de la commande sphérique à détection de force. La sphère peut pivoter librement à 360°. La sphère détecte l'amplitude et la direction de la force du toucher.

### Résumé de l'invention

L'invention vise à produire une montre qui ne souffre pas des inconvénients décrits ci-dessus. Ce but est atteint par la montre selon les revendications annexées.

Une montre selon l'invention comprend un organe de commande apte à gérer une première des fonctionnalités de la montre, telle qu'une couronne rotative ou un poussoir de chronographe, ainsi qu'une boule magnétique qui peut être pivotée manuellement par l'utilisateur autour de son centre. Un capteur magnétique 3D est agencé dans la montre pour détecter l'orientation du champ magnétique émis par la boule magnétique, ainsi qu'un processeur pour traduire le signal électrique généré par le capteur magnétique en une commande pouvant gérer une ou plusieurs fonctionnalités de la montre autre que la première fonctionnalité. De manière caractéristique pour l'invention, la boule magnétique est agencée partiellement dans l'organe de commande qui sert ainsi de support à cette boule magnétique. Ainsi, aucun usinage particulier n'est nécessaire dans la carrure ou autre partie formant la boîte de montre, seul l'organe de commande qui est fabriqué séparément de la boîte de montre devant être configuré pour recevoir la boule magnétique. De plus, comme l'organe de commande fait saillie hors de la carrure, l'accès à la boule magnétique par un utilisateur pour l'actionner est facilité car cette boule magnétique est située à une certaine distance de la surface extérieure de la carrure. La montre peut comprendre en outre un détecteur de proximité pour détecter la position axiale de l'organe de commande par rapport à la carrure de la montre.

### Brève description des figures

L'invention sera décrite ci-après de manière plus détaillée à l'aide des dessins annexés, donnés à titre d'exemples nullement limitatifs, dans lesquels :
- La figure 1 représente une section verticale du mécanisme tige-couronne en position 'tirée', dans une montre selon une forme d'exécution de l'invention.
- La figure 2 représente une section horizontale du même mécanisme que la figure 1, mais maintenant en position 'poussée'.
- La figure 3 représente une vue éclatée des composants du mécanisme des figures 1 et 2.
- Les figures 4 et 5 sont des sections qui représentent la position d'un détecteur magnétique incorporée dans la montre des figures 1 à 2, pour détecter la position de la couronne par rapport à la carrure de la montre.

### Description détaillée d'une forme d'exécution de l'invention

L'invention est décrite pour le cas d'une montre à aiguilles et à remontage mécanique, pourvue de fonctions additionnelles de caractère électroniques. Par exemple, la montre peut comprendre un écran digital sur lequel s'affichent des données, telles que la date, le temps sous forme numérique, des messages numériques ou d'autres informations qui sont accessibles en navigant dans un ou plusieurs menus. La montre comprend un mécanisme tige-couronne de remontage et de réglage des aiguilles, tel qu'il est bien connu dans l'état de la technique. De manière caractéristique pour l'invention, et avec référence aux figures, une boule magnétique 15 est agencée partiellement dans la couronne 1. La boule magnétique permet à l'utilisateur de gérer des fonctions additionnelles, par exemple le pilotage d'un curseur sur l'écran ou la sélection d'une option dans un menu affiché sur l'écran.

La couronne 1 n'est qu'une forme d'exécution d'un organe de commande monté latéralement par rapport à la carrure et auquel l'invention est applicable. Un autre exemple d'un tel organe de commande est la tête (généralement non-rotative) d'un poussoir d'une montre chronographe dont la première fonction est l'activation d'une fonction du chronographe. De manière générale, l'organe de commande auquel l'invention est applicable est un organe qui est agencé pour régler au moins une première fonction, de caractère mécanique ou électronique, et adapté selon l'invention pour régler une ou plusieurs fonctions électroniques additionnelles. L'invention sera décrite pour le cas de la couronne rotative, qui représente le cas le plus courant dans le domaine horloger mais qui ne limite pas la portée de l'invention.

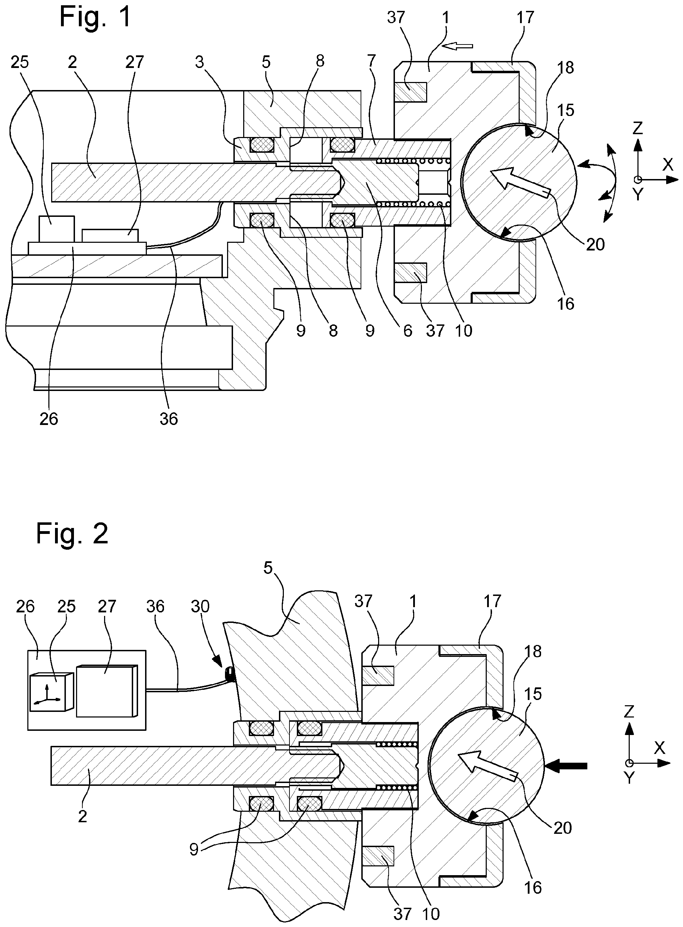

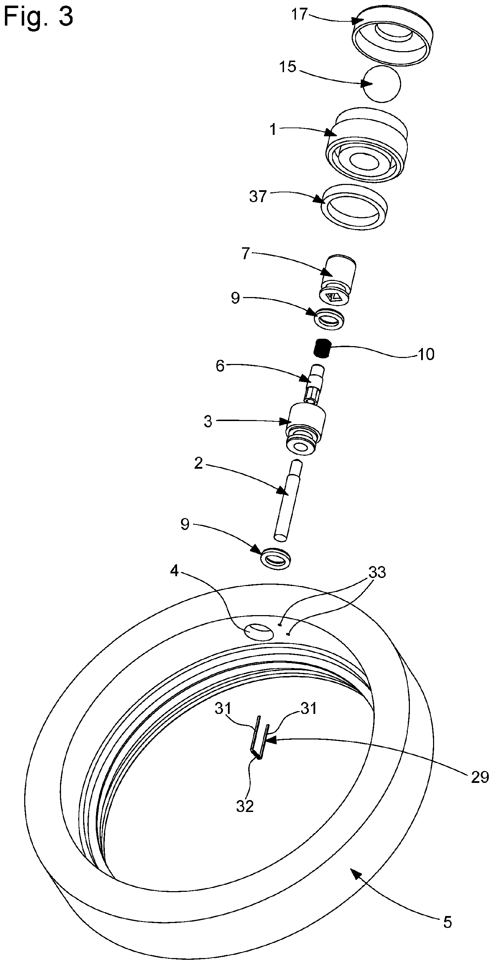

Les figures 1 et 2 représentent des coupes verticales et horizontales du mécanisme tige-couronne d'une montre selon une forme d'exécution de l'invention. A la figure 3, les différents composants sont visualisés dans une vue éclatée. De manière connue, la couronne 1 est reliée à une tige de remontoir 2 par l'intermédiaire d'un raccord-tige 6 chassé sur une extrémité de la tige 2. L'ensemble de la tige 2 et du raccord-tige 6 passe à travers un tube 3 monté de manière fixe dans un trou 4 usiné dans la paroi de la carrure 5 de la montre.

Dans la forme d'exécution représentée aux figures, la couronne rotative 1 est reliée au raccord-tige 6 par un mécanisme de poussoir à ressort qui est connu en soi et qui ne forme pas une limitation de la portée de l'invention. La couronne 1 est fixée sur un élément tubulaire 7 qui peut se déplacer axialement par rapport au raccord-tige 6, celui-ci étant logé à l'intérieur de l'élément tubulaire 7. Le raccord-tige 6 et l'élément 7 sont pourvus de profils correspondants qui permettent l'entrainement de la tige 2 en rotation par la couronne 1. Comme montré à la figure 2, la poussée de la couronne 1, exercée manuellement par l'utilisateur de la montre, actionne le mouvement axial de l'élément 7 jusqu'à ce que ce dernier arrive en contact avec une paroi verticale 8 du tube 3. Des bagues toriques 9 en matériau compressible entre le tube 3 et la carrure 5 et entre le l'élément 7 et le tube 3 assurent l'étanchéité du mécanisme. Un ressort 10 est monté entre une butée pourvue sur le raccord tige 6 et une surface intérieure de la couronne, de sorte que la poussée de la couronne comprime le ressort 10, qui repousse la couronne vers sa position initiale dès que la pression exercée sur la couronne est relâchée. La position étendue représentée à la figure 1 est donc la position de repos de la couronne. Au moins quand la couronne se trouve dans cette position de repos, la fonctionnalité de la boule magnétique 15 est assurée.

La boule 15 est incorporée partiellement dans la couronne 1, de préférence de sorte que le centre de la boule 15 se trouve sur l'axe de rotation de la couronne. Ceci est réalisé par l'usinage d'une cavité 16 semi-sphérique dans la surface extérieure de la couronne, dimensionnée pour recevoir la boule 15. Ensuite, un couvercle 17 est monté de manière fixe sur la couronne 1, le couvercle étant pourvu d'une ouverture dont la surface intérieure 18 est également sphérique avec la même courbure que la cavité 16. De cette manière, la boule 15 est maintenue en place toute en laissant une partie de la boule sortir de la surface du couvercle 17. Les surfaces de la boule 15 et de la cavité 16, ainsi que la surface intérieure 18 du couvercle 17 sont configurées pour que la boule 15 puisse glisser à l'intérieur de la cavité 16 et par rapport à la surface 18. La boule 15 peut donc subir un pivotement autour des trois axes spatiales X, Y, Z, le centre de la boule restant immobile par rapport à la couronne 1. L'utilisateur peut actionner ce pivotement par la manipulation de la partie de la boule qui sort de la surface du couvercle 17, de préférence en utilisant un doigt pour faire pivoter la boule.

La boule 15 est fabriquée d'un matériau magnétisé en permanence formant un aimant bipolaire. Dans une variante, un aimant bipolaire est incorporé dans une boule formant une enveloppe non magnétique pour l'aimant. La boule comprend donc deux pôles magnétiques qui génèrent un champ magnétique permanent. La direction du champ est indiquée par la flèche 20 aux figures 1 et 2.

La manipulation de la boule 15 par l'utilisateur change l'orientation du champ magnétique par rapport aux axes spatiaux X, Y, Z. La montre est équipée d'un capteur magnétique 3D 25 qui est agencé pour détecter le champ magnétique généré par la boule et déterminer son orientation. Le capteur 25 est monté sur une carte de circuit imprimé (PCB) 26 installée à l'intérieur de la montre. Le capteur 25 peut être un capteur connu en soi tel qu'un capteur à effet Hall. L'intensité du champ magnétique émis par la boule 15 et la distance prévue entre la boule 15, lorsque la couronne est dans sa position de repos, et le capteur 25 sont configurés tels qu'à la position du capteur 25, le champ magnétique terrestre, qui est situé entre 30 à 60 µT, soit négligeable par rapport au champ généré par la boule 15.

La boule 15 est opérée de la même manière qu'un 'trackball', et permet de traduire les changements de la position angulaire de la boule en commandes pour activer ou sélectionner des fonctions électroniques. De préférence, seulement les changements autour des axes Y et Z sont effectivement traduits en signaux électriques qui vont former la base des commandes, par exemple pour naviguer en deux directions dans un menu affiché sur un écran digital.

Un processeur 27 est à bord sur le PCB 26 pour traiter les signaux générés par le capteur 25 et pour les traduire en commandes qui vont gérer une ou plusieurs fonctionnalités électroniques de la montre, par exemple le pilotage d'un curseur sur l'écran en deux dimensions. On peut implémenter des méthodes et des algorithmes bien connus du domaine de l'informatique, pour le traitement des signaux ainsi que pour la génération des commandes. Une batterie ou autre source d'énergie électrique, telle qu'une cellule photovoltaïque, est présente dans la montre pour alimenter les composants montés sur le PCB 26 et/ou d'autres composants électroniques implémentés dans la montre.

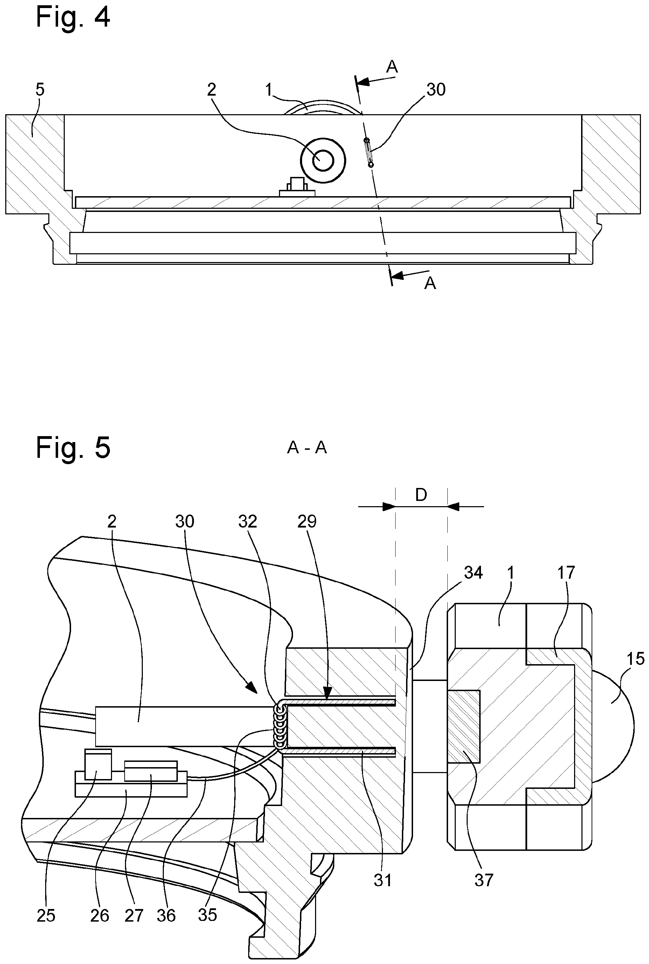

Aux figures on voit également un détecteur de proximité 30 qui est configuré pour détecter la position axiale de la couronne 1. Dans la forme d'exécution représentée aux figures et illustrée en détail aux figures 4 et 5, ce détecteur comprend une tige 29 en forme de 'U'. La tige 29 est fabriquée d'un matériau ferromagnétique, tel que la ferrite. Cette tige comprend deux jambes 31 et une portion de raccord 32 entre les jambes. Les deux jambes sont insérées dans des trous borgnes respectifs 33 pourvus dans la paroi de la carrure 5, de l'intérieur de la paroi vers l'extérieur, de sorte que les extrémités des jambes soient positionnées à proximité de la surface latérale extérieure 34 de la paroi de la carrure 5. Les trous 33 pourraient également traverser la paroi d'un côté à l'autre. La portion de raccord 32 est pourvue d'un solénoïde 35, connecté par un fil électrique 36 au PCB 26 sur lequel se trouvent des moyens pour mesurer un courant passant par ce solénoïde, lorsqu'il est soumis à une certaine tension électrique, et pour communiquer la valeur du courant au processeur 27.

Comme on voit à la figure 4, le détecteur 30 est positionné à côté du mécanisme tige-couronne, mais à une distance telle que les extrémités des jambes 31 se trouvent en face de la surface intérieure de la couronne 1. Un anneau en matériau ferromagnétique 37 (par exemple ferrite) est incorporé dans la couronne 1, de sorte que la surface latérale de cet anneau 37 se trouve en face des extrémités des jambes 31. La tige 29 en forme de U forme une partie d'un circuit magnétique à réluctance variable, la réluctance étant variable en fonction de la position de l'anneau 37, donc de la couronne 1. Un changement de la distance D indiquée à la figure 5 va changer la réluctance du circuit magnétique, ce qui sera détecté sur base d'un changement du courant dans le solénoïde 35. Ce principe est connu en soi et d'autres modes de réalisation de ce type de détecteur peuvent être utilisés.

Dans la forme d'exécution représentée aux figures, le détecteur 30 est configuré pour détecter la poussée de la couronne, actionnée par l'utilisateur à l'encontre de la force du ressort 10, et de générer un signal électrique en fonction de cette détection, de sorte que le processeur génère en réponse une commande spécifique et différente des commandes générées par la manipulation de la boule 15. Les commandes générées par la poussée de la couronne 1 peuvent être par exemple des commandes de confirmation d'une sélection parmi des options présentées dans un menu. La poussée réversible peut être utilisée également pour activer et ensuite désactiver la fonction 'trackball' de la boule 15. Dans une variante, a durée de la poussée peut déterminer la commande ; par exemple, une durée plus longue pour l'activation ou désactivation de la fonction 'trackball' et une durée plus courte pour confirmer une sélection dès que la fonction est active.

Au lieu du détecteur magnétique 30, d'autres types de détecteur de proximité peuvent être utilisés pour remplir les mêmes fonctionnalités. Par exemple, on peut prévoir un détecteur capacitif réalisé par l'intégration de deux plaques d'un condensateur agencées respectivement dans le tube 3 et dans l'élément 7.

Dans beaucoup de montres mécaniques ou électroniques, la couronne peut être éloignée de la carrure 5, en tirant manuellement la couronne 1 par rapport à la position de repos, pour activer des modes de réglage mécanique tel que l'ajustement de la position des aiguilles ou du quantième. Différents systèmes existent qui règlent le positionnement axial de la couronne 1 et l'actionnement du réglage mécanique, et l'invention est applicable en combinaison avec l'un quelconque de ces systèmes. De plus, dans une montre selon l'invention, l'un quelconque de ces systèmes peut être combiné avec une couronne à poussoir telle que décrit ci-dessus. Quand la couronne est éloignée de la carrure en position de réglage, la boule magnétique 15 est de préférence désactivée, par exemple par l'intermédiaire du détecteur 30. Cependant, de manière alternative, la boule peut rester en opération dans cette position éloignée et remplir une même fonction ou une fonction différente.

L'invention n'est donc pas limitée aux montres à remontage mécanique, mais elle est applicable également à des montres électroniques ou électromécaniques. La caractéristique principale de l'invention est que la boule magnétique est incorporée partiellement dans l'organe de commande. De cette manière, on évite l'application de plusieurs organes de commande pour commander différentes fonctionnalités.

## Revendications

1. Montre comprenant une boîte de montre qui inclut une carrure (5), un mouvement horloger à l'intérieur de la carrure et un organe de commande (1) monté latéralement sur la carrure, cet organe de commande étant déplaçable selon un axe donné (X) entre une première position proche de la carrure et au moins une deuxième position plus éloignée de la carrure, l'organe de commande étant configuré pour remplir au moins une première fonction de la montre et la montre étant pourvue d'une ou plusieurs fonctions additionnelles gérables par des signaux électriques, **caractérisée en ce que** la montre comprend en outre :
- une boule magnétique (15) incorporée partiellement dans l'organe de commande (1) de manière que cette boule magnétique puisse pivoter autour de son centre qui reste immobile par rapport à l'organe de commande (1), et de manière que la boule magnétique (15) soit accessible à un utilisateur de la montre de sorte que l'utilisateur puisse pivoter manuellement cette boule magnétique ;
- un capteur magnétique (25) agencé fixe relativement à la carrure, ce capteur magnétique étant apte à détecter une orientation ou un changement d'orientation d'un champ magnétique généré par la boule magnétique et à fournir un signal électrique qui est représentatif de ladite orientation ou dudit changement d'orientation ; et
- un processeur (27) configuré pour gérer ladite une ou plusieurs fonctions additionnelles sur base du signal électrique généré par le capteur magnétique (25).

2. Montre selon la revendication 1, **caractérisée en ce que** la boule magnétique (15) peut subir un pivotement autour de chacun des trois axes spatiales (X, Y, Z), au moins les changements de position angulaire autour des deux axes orthogonaux (Y, Z) et perpendiculaires audit axe de déplacement de l'organe de commande étant traduits en signaux électriques pour former la base de ladite fonction additionnelle ou desdites plusieurs fonctions additionnelles.

3. Montre selon la revendication 1 ou 2, **caractérisée en ce qu'**elle comprend en outre un détecteur de proximité (30) configuré pour détecter la position axiale de l'organe de commande (1) par rapport à la carrure (5).

4. Montre selon la revendication 3, **caractérisée en ce que** ledit détecteur de proximité (30) est un détecteur magnétique à réluctance variable.

5. Montre selon la revendication 3 ou 4, **caractérisée en ce que** le détecteur de proximité (30) comprend une tige (29) en forme de 'U' et fabriquée d'un matériau ferromagnétique, la tige comprenant deux jambes (31) et une portion de raccord (32) et étant pourvue d'un solénoïde (35), les deux jambes étant agencées dans la paroi latérale de la carrure de sorte que les extrémités libres de ces jambes (31) se trouvent à proximité de la surface latérale extérieure (34) de la carrure (5) et en face d'un matériau ferromagnétique (37) formant au moins en partie l'organe de commande (1), le solénoïde (35) étant relié à un moyen de détection de l'intensité d'un courant le traversant lorsqu'une certaine tension lui est appliquée.

6. Montre selon l'une quelconque des revendications 3 à 5, **caractérisée en ce que** :
- l'organe de commande (1) est capable de subir un rapprochement axial et auto-réversible par rapport à la carrure (5), à partir de ladite position de repos ;
- le détecteur de proximité (30) est agencé de manière à pouvoir détecter ledit rapprochement ; et
- le processeur (27) est configuré pour engendrer en réponse de la détection du rapprochement une commande qui est différente des commandes générées par la manipulation de la boule magnétique (15).

7. Montre selon la revendication 6, **caractérisée en ce que** l'organe de commande (1) est lié à un mécanisme de poussoir à ressort (10).

8. Montre selon la revendication 6 ou 7, **caractérisée en ce qu'**une commande générée par la détection du rapprochement axial est l'activation ou la désactivation de la fonction de la boule magnétique (15).

9. Montre selon la revendication 6 ou 7, **caractérisée en ce qu'**une commande générée par la détection du rapprochement axial est la confirmation d'une sélection.

10. Montre selon l'une quelconque des revendications précédentes, **caractérisée en ce que** l'organe de commande est une couronne rotative (1), la rotation de la couronne autour de son axe de rotation effectuant au moins ladite première fonction.

11. Montre selon la revendication 10, **caractérisée en ce que** la couronne (1) est reliée à une tige de réglage (2) d'une ou plusieurs fonctions du mouvement horloger.

12. Montre selon l'une quelconque des revendications précédentes, **caractérisée en ce que** le mouvement horloger est du type mécanique.

13. Montre selon l'une quelconque des revendications précédentes, **caractérisée en ce que** le capteur magnétique (25) est monté sur une carte de circuit imprimé (26) installée à l'intérieur de la boîte de montre.

## Patentansprüche

1. Uhr, umfassend ein Uhrgehäuse, das einen Mittelteil (5), ein Uhrwerk im Inneren des Mittelteils und ein Steuerungsorgan (1) beinhaltet, das seitlich am Mittelteil montiert ist, wobei dieses Steuerungsorgan entlang einer gegebenen Achse (X) zwischen einer ersten Position nahe dem Mittelteil und mindestens einer zweiten Position, weiter von dem Mittelteil entfernt, verschiebbar ist, wobei das Steuerungsorgan konfiguriert ist, um mindestens eine erste Funktion der Uhr zu erfüllen, und die Uhr mit einer oder mehreren Zusatzfunktionen versehen ist, die durch elektrische Signale handhabbar sind, **dadurch gekennzeichnet, dass** die Uhr weiter Folgendes umfasst:
- eine Magnetkugel (15), die teilweise in das Steuerungsorgan (1) eingebaut ist, sodass sich diese Magnetkugel um ihre Mitte drehen kann, welche in Bezug auf das Steuerungsorgan (1) unbeweglich bleibt, und derart, dass die Magnetkugel (15) für einen Nutzer der Uhr zugänglich ist, sodass der Nutzer diese Magnetkugel von Hand drehen kann;
- einen Magnetmesswertaufnehmer (25), der in Bezug auf den Mittelteil fest angeordnet ist, wobei dieser Magnetmesswertaufnehmer imstande ist, eine Orientierung oder eine Orientierungsänderung eines Magnetfeldes, das von der Magnetkugel erzeugt wird, zu detektieren, und ein elektrisches Signal bereitzustellen, das repräsentativ für die Orientierung oder die Orientierungsänderung ist; und
- einen Prozessor (27), der konfiguriert ist, um die eine oder mehrere Zusatzfunktionen auf der Basis des von dem Magnetmesswertaufnehmer (25) erzeugten elektrischen Signals handzuhaben.

2. Uhr nach Anspruch 1, **dadurch gekennzeichnet, dass** die Magnetkugel (15) eine Drehung um jede der drei räumlichen Achsen (X, Y, Z) erfahren kann, wobei mindestens die Winkelpositionsänderungen um die beiden orthogonalen Achsen (Y, Z) und senkrecht zur Verschiebeachse des Steuerungsorgans in elektrische Signale umgewandelt werden, um die Basis für die Zusatzfunktion oder mehrere Zusatzfunktionen zu bilden.

3. Uhr nach Anspruch 1 oder 2, **dadurch gekennzeichnet, dass** sie weiter einen Näherungsdetektor (30) umfasst, der konfiguriert ist, um die axiale Position des Steuerungsorgans (1) in Bezug auf den Mittelteil (5) zu detektieren.

4. Uhr nach Anspruch 3, **dadurch gekennzeichnet, dass** der Näherungsdetektor (30) ein magnetischer Detektor mit variabler Reluktanz ist.

5. Uhr nach Anspruch 3 oder 4, **dadurch gekennzeichnet, dass** der Näherungsdetektor (30) eine Welle (29) in Form eines 'U' und aus einem ferromagnetischen Werkstoff hergestellt umfasst, wobei die Welle zwei Schenkel (31) und einen Anschlussabschnitt (32) umfasst, und mit einem Solenoid (35) versehen ist, wobei die beiden Schenkel in der Seitenwand des Mittelteils angeordnet sind, sodass sich die freien Enden dieser Schenkel (31) in der Nähe der äußeren Seitenfläche (34) des Mittelteils (5), und gegenüber einem ferromagnetischen Werkstoff (37) befinden, der mindestens teilweise das Steuerungsorgan (1) bildet, wobei das Solenoid (35) mit einem Mittel zur Detektion der Intensität eines Stroms verbunden ist, welcher dieses durchquert, wenn daran eine bestimmte Spannung angelegt wird.

6. Uhr nach einem der Ansprüche 3 bis 5, **dadurch gekennzeichnet, dass**:
- das Steuerungsorgan (1) imstande ist, eine axiale und selbst umkehrbare Annäherung in Bezug auf den Mittelteil (5) aus der Ruheposition heraus zu erfahren;
- der Näherungsdetektor (30) derart angeordnet ist, um die Annäherung detektieren zu können; und
- der Prozessor (27) konfiguriert ist, um als Reaktion auf die Detektion der Annäherung einen Befehl zu erzeugen, der sich von den Befehlen unterscheidet, die durch die Manipulation der Magnetkugel (15) erzeugt werden.

7. Uhr nach Anspruch 6, **dadurch gekennzeichnet, dass** das Steuerungsorgan (1) mit einem Feder-Drückermechanismus (10) verbunden ist.

8. Uhr nach Anspruch 6 oder 7, **dadurch gekennzeichnet, dass** ein durch die Detektion der axialen Annäherung erzeugter Befehl die Aktivierung oder die Deaktivierung der Funktion der Magnetkugel (15) ist.

9. Uhr nach Anspruch 6 oder 7, **dadurch gekennzeichnet, dass** ein durch die Detektion der axialen Annäherung erzeugter Befehl die Bestätigung einer Auswahl ist.

10. Uhr nach einem der vorstehenden Ansprüche, **dadurch gekennzeichnet, dass** das Steuerungsorgan eine Drehkrone (1) ist, wobei die Drehung der Krone um ihre Drehachse mindestens die erste Funktion ausführt.

11. Uhr nach Anspruch 10, **dadurch gekennzeichnet, dass** die Krone (1) mit einer Einstellwelle (2) für eine oder mehrere Funktionen des Uhrwerks verbunden ist.

12. Uhr nach einem der vorstehenden Ansprüche, **dadurch gekennzeichnet, dass** das Uhrwerk ein mechanisches ist.

13. Uhr nach einem der vorstehenden Ansprüche, **dadurch gekennzeichnet, dass** der Magnetmesswertaufnehmer (25) auf einer gedruckten Schaltungskarte (26) montiert ist, die im Inneren des Uhrgehäuses installiert ist.

## Claims

1. Watch comprising a watch case that includes a middle (5), a horological movement inside the middle and a control member (1) mounted laterally on the middle, this control member being capable of displacement along a given axis (X) between a first position close to the middle and at least one second position further away from the middle, the control member being configured so as to perform at least a primary feature of the watch, and the watch being provided with one or more additional features capable of being managed by electric signals, **characterised in that** the watch further comprises:
- a magnetic ball (15) partially incorporated into the control member (1) such that this magnetic ball can pivot about the centre thereof, which remains unmoving relative to the control member (1), and such that the magnetic ball (15) can be accessed by a user of the watch such that the user can manually pivot this magnetic ball;
- a magnetic sensor (25) arranged such that it is stationary relative to the middle, this magnetic sensor being capable of detecting an orientation or a change in orientation of a magnetic field generated by the magnetic ball and of providing an electric signal representative of said orientation or of said change in orientation; and
- a processor (27) configured so as to manage said one or more additional features on the basis of the electric signal generated by the magnetic sensor (25).

2. Watch according to claim 1, **characterised in that** the magnetic ball (15) can pivot about each of the three spatial axes (X, Y, Z), at least the changes in angular position about the two orthogonal axes (Y, Z) perpendicular to said axis of displacement of the control member being translated into electrical signals to form the basis of said one or more additional features.

3. Watch according to claim 1 or 2, **characterised in that** it further comprises a proximity sensor (30) configured so as to detect the axial position of the control member (1) relative to the middle (5).

4. Watch according to claim 3, **characterised in that** said proximity sensor (30) is a variable reluctance magnetic sensor.

5. Watch according to claim 3 or 4, **characterised in that** the proximity sensor (30) comprises a 'U'-shaped bar (29) made of a ferromagnetic material, the bar comprising two legs (31) and a connecting portion (32) and being provided with a solenoid (35), the two legs being arranged in the lateral wall of the middle such that the free ends of these legs (31) are located in the vicinity of the lateral outer surface (34) of the middle (5) and facing a ferromagnetic material (37) forming, at least in part, the control member (1), the solenoid (35) being connected to a means for detecting the intensity of a current passing therethrough when a certain voltage is applied thereto.

6. Watch according to any one of claims 3 to 5, **characterised in that**:
- the control member (1) is capable of being axially approached, in a self-reverting manner, towards the middle (5), from said rest position;
- the proximity sensor (30) is arranged so as to be able to detect said approach; and
- the processor (27) is configured so as to produce, in response to the detection of the approach, an instruction that is different from the instructions generated by the manipulation of the magnetic ball (15).

7. Watch according to claim 6, **characterised in that** the control member (1) is linked to a push-piece mechanism comprising a spring (10).

8. Watch according to claim 6 or 7, **characterised in that** an instruction generated by the detection of the axial approach is the activation or deactivation of the feature consisting of the magnetic ball (15).

9. Watch according to claim 6 or 7, **characterised in that** an instruction generated by the detection of the axial approach is the confirmation of a selection.

10. Watch according to any one of the preceding claims, **characterised in that** the control member is a rotating crown (1), the rotation of the crown about the axis of rotation thereof performing at least said primary feature.

11. Watch according to claim 10, **characterised in that** the crown (1) is connected to a stem (2) for setting one or more features of the horological movement.

12. Watch according to any one of the preceding claims, **characterised in that** the horological movement is of the mechanical type.

13. Watch according to any one of the preceding claims, **characterised in that** the magnetic sensor (25) is mounted on a printed circuit board (26) installed inside the watch case.
